# EUROPÄISCHE PATENTSCHRIFT

(11) **EP 3 735 820 B1**
(45) Veröffentlichungstag und Bekanntmachung des Hinweises auf die Patenterteilung: **03.08.2022**
(21) Anmeldenummer: 20155764.2
(22) Anmeldetag: 06.02.2020
(51) Int. Cl.: A01F 15/12

(54) **BALLENPRESSE UND GARNBREMSE DAFÜR**
BALER AND YARN BRAKE FOR SAME
PRESSE À BALLES ET FREIN POUR FICELLE ASSOCIÉ

(30) Priorität: 10.05.2019 DE 102019003309
(43) Veröffentlichungstag der Anmeldung: 11.11.2020
(73) Patentinhaber: Usines CLAAS France S.A.S, 57140 St. Rémy / Woippy (FR)
(72) Erfinder: Lallement, Jérôme, 57420 Solgne (FR); Maurer, Michel, 57200 Sarraguemines (FR); Saidia, Abdelkader, 57420 Solgne (FR); Dallefrate, Christophe, 57420 Saint Jure (FR)
(74) Vertreter: CLAAS Gruppe

(56) Entgegenhaltungen:
- EP-B1- 1 731 024
- DE-U1- 29 905 765
- US-A- 4 378 732
- US-A- 5 783 816
- US-A1- 2007 266 865

## Beschreibung

Die vorliegende Erfindung betrifft eine landwirtschaftliche Ballenpresse und eine Garnbremse zur Verwendung darin.

Landwirtschaftliche Ballenpressen sind als Quaderballenpressen und als Rundballenpressen bekannt. Beiden ist gemeinsam, dass sie im Betrieb einen Garnvorrat mit sich führen, aus dem jeweils bei Fertigstellung Garn abgezogen wird, um es um den Ballen zu wickeln und zu verknoten, um so den Zusammenhalt des Ballens nach dem Auswerfen aus der Presse sicherzustellen.

Aus der EP 1 731 024 B1 ist eine Ballenpresse für Quaderballen bekannt, bei der sich neben einer Presskammer ein Stauraum für das zum Binden der Ballen verwendete Garn erstreckt. Das Garn wird in den Stauraum in Form von hohlen Knäueln geladen. Um das Garn zum Gebrauch vorzubereiten, wird jeweils ein inneres Garnende aus einem der Knäuel herausgezogen und über den Garnauslass in einen Knoter der Ballenpresse eingeführt. Um eine sichere Garnzufuhr auch von einem von dem Garnauslass entfernten Knäuel zu gewährleisten, sind Garnführungsmittel im Stauraum vorgesehen, in die das Garn eingefädelt werden soll. Das Einfädeln ist jedoch mühsam, wenn der Platz zwischen den Garnknäulen und einer Decke des Stauraums, an der die Garnführungsmittel angebracht sind, eng ist oder in der Ballenpresse nur hoch über dem Boden Platz für den Stauraum ist.

Um lange Betriebszeiten der Ballenpresse ohne Nachladen von Garn zu ermöglichen, ist ein großer und damit zwangsläufig zumindest teilweise bodenferner Stauraum notwendig. Außerdem muss im verfügbaren Stauraum eine möglichst große Menge Garn untergebracht werden. Dies zwingt dazu, einen Freiraum über den Garnknäulen zu minimieren, so dass ein dort angebrachtes Garnführungsmittel zwangläufig schlecht zu erreichen ist.

Eine Ballenpresse gemäß dem Oberbegriff des Anspruches 1 ist aus der US 5,783,816 A bekannt. Die US 5,783,816 A offenbart einen Kasten, in dem mehrere Garnknäuel angeordnet sind. Der Kasten ist durch einen schwenkbaren Deckel verschlossen. An der Innenseite des Deckels sind Ösen angeordnet, durch welche das Garn geführt ist. An einer seitlichen Wandung des Kastens sind Öffnungen angeordnet, durch welche das Garn außerhalb des Kastens befindlichen Bindemechanismen zugeführt wird.

Eine Aufgabe der vorliegenden Erfindung ist, eine Ballenpresse zu schaffen, die in der Lage ist, eine große Menge Bindegarn zu laden und dennoch ein bequemes und schnelles Einfädeln des Bindegarns ermöglicht.

Die Aufgabe wird gelöst, indem bei einer Ballenpresse mit einem Stauraum für mehrere Garnknäuel, wenigstens einem Garnauslass, durch den hindurch Garn von den Garnknäueln aus dem Stauraum abziehbar ist, und mindestens einem Garnführungsmittel zum Festlegen des Verlaufs wenigstens eines Garnstrangs von einem in den Stauraum geladenen Garnknäuel zum Garnauslass, das Garnführungsmittel zwischen einer Betriebsposition, in der es während des Betriebs der Ballenpresse den Garnstrang führt, und einer Vorbereitungsposition geführt bewegbar ist. Die Betriebsposition kann dann ohne Nachteil schlecht zugänglich sein, wohingegen die Vorbereitungsposition eine Position sein kann, von der lediglich gute Zugänglichkeit verlangt ist, in der aber nicht einmal ein Betrieb der Ballenpresse möglich sein muss.

Die geführte Bewegung des Garnführungsmittels ist eine Schwenkbewegung um eine Achse. Insbesondere ist die geführte Bewegung des Garnführungsmittels eine Schwenkbewegung um eine horizontale Achse. Das Führen einer Schwenkbewegung ist mit einfachen und robusten mechanischen Mitteln möglich.

Das Garnführungsmittel ist auf einem in Richtung der Achse langgestreckten Träger angebracht, und von dem Träger in radialer Richtung ausgehende Arme sind an die Achse angelenkt.

Um zu verhindern, dass sich beim Verlagern des Garnführungsmittels in die Betriebsstellung lose Schlaufen des eingefädelten Garns bilden, die sich verhaken und blockieren könnten, wenn Garn in den Knoter eingezogen wird, sollte der Abstand zwischen der Achse und dem Garnauslass klein sein. Vorzugsweise ist deshalb der Abstand des Garnauslasses von der Achse maximal halb so groß wie der Abstand des Garnführungsmittels von der Achse.

Damit das Garnführungsmittel in der Vorbereitungsposition gut erreichbar ist, sollte die Vorbereitungsposition an der Ballenpresse tiefer oder weiter auswärts als die Betriebsposition liegen. Insbesondere kann das Garnführungsmittel in der Vorbereitungsposition seitwärts aus dem Stauraum herausgeschwenkt sein. Das Garnführungsmittel kann in der Vorbereitungsposition den - abgesehen vielleicht von einer in der Vorbereitungsposition offenen Tür oder Klappe des Stauraums - am weitesten seitwärts, d.h. quer zur Fahrtrichtung überstehenden Punkt der Ballenpresse bilden; wenn die Ballenpresse nur gefahren wird, wenn sich das Garnführungsmittel in Betriebsposition befindet, besteht keine Gefahr, dass das Garnführungsmittel durch Anstoßen Schaden nimmt oder verursacht. Gleichzeitig erlaubt es die exponierte Position des Garnführungsmittels einem Benutzer, in einer bequemen aufrechten Körperhaltung das Garn einzufädeln.

Wenn der Stauraum in mehrere übereinanderliegende Teilfächer unterteilt ist, kann das wie oben beschrieben bewegliche Garnführungsmittel an einem oberen Teilfach vorgesehen sein.

Während die Betriebsposition des beweglichen Garnführungsmittels in solch einem Fall im oberen Teilfach sein wird, kann die Vorbereitungsposition in bequemer erreichbarer Höhe, in Höhe des unteren Teilfachs, liegen.

Die Achse, um die das Garnführungsmittel schwenkbar ist, liegt dann vorzugsweise oberhalb eines die Teilfächer voneinander trennenden Zwischenbodens; so kann der Zwischenboden sich auch an seinen Schmalseiten an Wänden des Stauraums abstützen.

Um in einem großen Stauraum das Garn auch über große Entfernungen sicher zum Garnauslass zu führen, können mehrere Garnführungsmittel entlang des Stauraums verteilt sein. Vorzugsweise sind diese auf einem gemeinsamen Träger in einer Längsrichtung beabstandet angeordnet und zusammen mit dem Träger gemeinsam zwischen der Lade- und der Betriebsposition bewegbar. Die Längsrichtung kann die Richtung der Achse sein.

Der Stauraum sollte durch eine Klappe verschließbar sein. Wenn die die Klappe in geschlossener Stellung den Weg des Garnführungsmittels in die Ladestellung versperrt, kann sie nicht nur der Sicherung des Garns vor einem Herausfallen aus dem Stauraum, sondern gleichzeitig auch der Sicherung des Garnführungsmittels in der Betriebsstellung dienen.

Um eine straffe Führung des Garns im Knoter und auf dem Weg dorthin zu gewährleisten, sollte auf dem Weg eines Garnstrangs vom Knäuel zum Knoter eine Garnbremse wie z.B. in DE 101 53 517 B4 gezeigt vorgesehen sein.

Um das Garn auf möglichst großer Länge straff zu halten, sollte die Garnbremse nicht unnötig weit vom Knäuel entfernt sein, dessen Garnstrang durch die Garnbremse verläuft. Deswegen ist die Garnbremse erfindungsgemäß vorzugsweise auf einer gemeinsamen Unterlage mit dem Garnführungsmittel montiert und gemeinsam mit diesem bewegbar.

Um im Betrieb nicht locker zu werden, darf eine Garnbremse der aus DE 101 53 517 B4 bekannten Bauart nicht zu leichtgängig verstellbar sein; die Schwergängigkeit macht allerdings den Gebrauch von Werkzeug zum Einstellen der Garnspannung nötig und kann, wenn kein Werkzeug zur Hand ist, dazu führen, dass die Garnspannung nicht korrekt eingestellt wird und der Knoter nicht befriedigend arbeitet. Deshalb besteht Bedarf nach einem Knoter, der ohne Gebrauch von Werkzeugen einstellbar ist und dennoch eine eingestellte Spannung sicher aufrechterhält.

Zu diesem Zweck ist erfindungsgemäß eine Garnbremse vorgesehen mit zwei Backen, die einen Klemmspalt begrenzen, wenigstens einer Gewindestange und einer Schraubenfeder, die koaxial zur Gewindestange angeordnet und zwischen einem der Backen und einer entlang der Gewindestange beweglichen Mutter in verstellbarem Maße stauchbar ist, bei der die Mutter eine Flügelmutter ist und eine zwischen der Mutter und der Schraubenfeder geklemmte, an der Gewindestange drehfeste Druckplatte wenigstens eine mit einem Flügel der Flügelmutter zusammenwirkende Rastkontur aufweist.

Der Eingriff in die Rastkontur ermöglicht eine Fixierung der Flügelmutter in diskreten Stellungen auch dann, wenn die Reibung zwischen ihr und der Gewindestange an sich gering ist.

Um die Rastkontur zu bilden, kann der Flügel über einen zentralen Gewindekörper der Flügelmutter zur Druckscheibe hin vorspringen und die Rastkontur eine Kerbe umfassen, in die der Flügel mit seiner vorspringenden Kante eingreift.

Um die diskreten Stellungen zu definieren, kann die Rastkontur wenigstens eine Kerbe aufweisen. Wenn die Kerbe die Drehachse der Flügelmutter kreuzt, genügt eine Kerbe, um zwei um jeweils 180° gegeneinander verdrehte Raststellungen zu definieren. Vorzugsweise sind wenigstens zwei einander kreuzende Kerben vorgesehen.

Um eine Drehung der Druckscheibe zusammen mit der Flügelmutter zu unterbinden, können an der Garnbremse zwei Gewindestangen vorgesehen sein, die beide die Druckscheibe durchsetzen. Auch die zweite Gewindestange kann eine Flügelmutter tragen, die mit Kerben der Druckscheibe zusammenwirkt.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: eine erfindungsgemäße Ballenpresse;
- Fig. 2: einen Stauraum für Bindegarn der Ballenpresse aus Fig. 1 mit einem Garnführungsmittel tragenden Bügel in Betriebsposition;
- Fig. 3: den Stauraum aus Fig.2 mit dem Bügel in Vorbereitungsposition;
- Fig. 4: ein vergrößertes Detail aus Fig. 2;
- Fig. 5: eine an einem Arm des Bügels montierte Garnbremse;
- Fig. 6: eine Flügelmutter der Garnbremse aus Fig. 5; und

- Fig. 7: eine mit der Flügelmutter zusammenwirkende Druckscheibe.

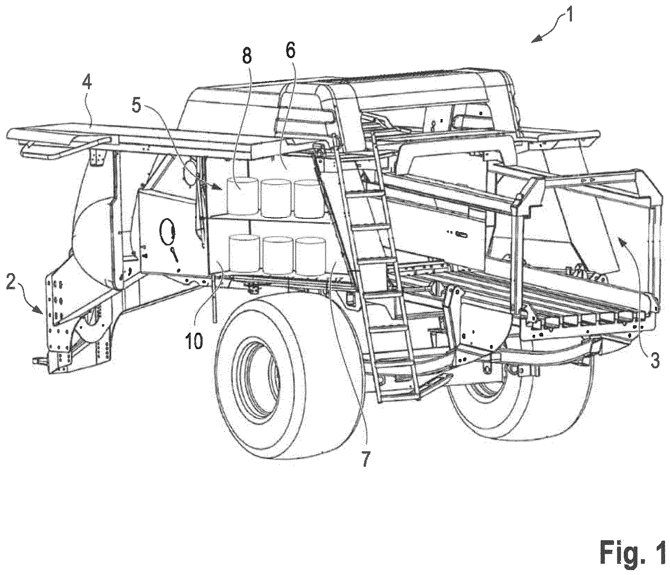

Fig. 1 zeigt in einer perspektivischen Ansicht eine Ballenpresse 1 als Ausführungsbeispiel der vorliegenden Erfindung. Die gezeigte Ballenpresse 1 ist eine Quaderballenpresse, allerdings sind die im Folgenden erläuterten erfindungsgemäßen Besonderheiten der Bindegarnführung in gleicher Weise auch bei einer Rundballenpresse anwendbar.

Die Ballenpresse 1 ist in einer Ansicht schräg von hinten gezeigt; eine Pickup-Vorrichtung, mit der Erntegut in der Fahrt vom Feld aufgesammelt wird, ist an einer vom Betrachter abgewandten Vorderseite 2 der Ballenpresse 1 montierbar. Eine Presskammer, der das aufgesammelte Erntegut nach Zerkleinern in einem Messerwerk zugeführt und in der es von einem hin- und her beweglichen Kolben verdichtet wird, erstreckt sich mittig in Längsrichtung der Ballenpresse 1; die Ansicht zeigt ein offenes hinteres Ende 3 der Presskammer in einer offenen Stellung zum Auswerfen eines fertigen Ballens. Eine an dem offenen Ende 3 montierte Entladerampe ist in Fig. 1 weggelassen, sie ist zwischen einer das offene Ende verschließenden aufrechten Stellung und einer Entladestellung schwenkbar, in der ein über das offene Ende 3 ausgestoßener Ballen auf der Entladerampe zu Boden rutschen kann.

Die Presskammer ist auf wenigstens einer, vorzugsweise beiden Längsseiten flankiert von Stauräumen 5 für Bindegarn, das im Laufe der Ballenbildung um einen in der Presskammer entstehenden Ballen herumgeschlungen und schließlich verknotet wird, um den fertigen Ballen zusammenzuhalten. Um das Bindegarn um den Ballen herumzuführen und zu verknoten, können beliebige bekannte Techniken eingesetzt werden, die hier nicht erläutert zu werden brauchen.

Fig. 1 zeigt einen solchen Stauraum 5; vorzugsweise ist ein zweiter Stauraum an der gegenüberliegenden Seite der Ballenpresse spiegelbildlich zum ersten ausgebildet und wird daher nicht eigens beschrieben.

Der Stauraum 5 ist im Betrieb durch eine Klappe 6 verschlossen; Fig.1 zeigt die Klappe 6 in einer offenen, hier entlang einer am oberen Rand des Stauraums 5 verlaufenden Achse hochgeschwenkten Stellung, in der sie den Zugriff auf den Stauraum 5, insbesondere das Einladen von Bindegarnknäulen 8 in den Stauraum 5, erlaubt. Fig. 1 zeigt sechs Bindegarnknäule 8, verteilt auf zwei durch einen Zwischenboden 9 getrennte Ebenen.

Jeweils mehrere Bindegarnknäule 8 versorgen einen gleichen, in den Figuren nicht gezeigten, an sich bekannten Knoter. Die Garnknäule 8 haben hier jeweils die Form von Spulen ohne Kern; so ist es möglich, Garn von einem Knäuel 8 zu entnehmen, indem es von innen her aus einem Knäuel herausgezogen wird, ohne dass das Knäuel dabei rotiert. Deswegen können beim Beladen der Ballenpresse 1 mit Bindegarn die Enden von Knäulen 8, die denselben Knoter versorgen, untereinander verknotet werden, so dass, wenn ein Knäuel verbraucht ist, das Garn vom nächsten Knäuel nachrückt, ohne dass dafür der Erntevorgang unterbrochen werden muss. So können z.B. in der Darstellung der Fig. 1 jeweils zwei Knäule einem Knoter zugeordnet sein, indem ein inneres Ende eines Knäuels auf der oberen Ebene in den Knoter eingefädelt ist, und sein äußeres Ende mit dem inneren Ende des darunter stehenden Knäuels verknotet ist.

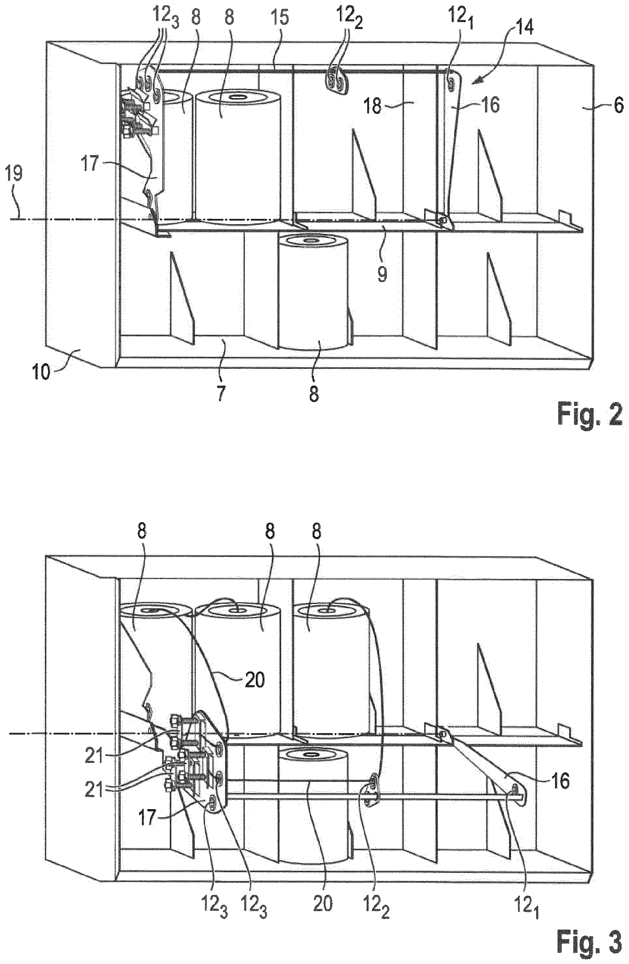

Die Zahl der einem Knoter zugeordneten Knäule kann variieren. In der Ausgestaltung der Fig. 2 und 3 umfasst der Stauraum 5 mehrere nebeneinanderliegende Fächer 7₁, 7₂ und 7₃, die jeweils Platz für mehrere Bindegarnknäule 8 bieten. Jedem Fach 7₁, 7₂ und 7₃ ist ein Knoter zugeordnet, d. h. die in dem Fach untergebrachten Knäule 8 sind vorgesehen, um den zugeordneten Knoter zu versorgen. Im hier gezeigten Fall ist jedes Fach 7₁, 7₂ und 7₃ durch einen Zwischenboden 9 weiter unterteilt in ein oberes und ein unteres Teilfach.

Die vier Knäule 8, die in der Darstellung der Fig. 1 in jedem Fach 7₁, 7₂ bzw. 7₃ untergebracht sind, sind jeweils der Reihe nach untereinander verbunden. Es ist jeweils das obere linke Knäuel 8, d.h. das in Fahrtrichtung vordere, das erste, das verbraucht wird; ein aus seinem inneren Hohlraum herausgezogener Garnstrang ist über einen Auslass aus dem Stauraum 5 herausgeführt und erstreckt sich bis in den Knoter. Ein äußeres Ende desselben Knäuels ist mit dem inneren Ende des rechts benachbarten Knäuels 8 verknotet, damit Garn aus letzterem in den Knoter nachrückt, wenn das erste Knäuel verbraucht ist. Das äußere Ende dieses zweiten Knäuels ist wiederum verknotet mit dem inneren Ende des unmittelbar darunterliegenden Knäuels, und dessen äußeres Ende mit dem inneren Ende seines Nachbarn zur Linken.

Ein Garnauslass, über den das Garn den Stauraum 5 verlässt und dem Knoter zugeführt wird, befindet sich für alle Knoter übereinstimmend an einer vorderen Schmalseite des Stauraums 5. In Fig. 1 ist der Garnauslass in einer vorderen Stirnwand 10 verborgen.

Um zu verhindern, dass die sich von mehreren Knäulen 8 der Fächer 7₁, 7₂, 7₃ zum Auslass erstreckenden Garnstränge sich verhaken oder gegenseitig stören, sind Garnführungsmittel 12 in Form von Ösen vorgesehen, in die die aus dem ersten zu verbrauchenden Knäuel jedes Fachs herausgezogenen Garnstränge bei der Einsatzvorbereitung der Ballenpresse 1 eingefädelt werden. Man erkennt in Fig. 2 eine Öse 12₁ neben dem hier leer dargestellten Fach 7₁ am hinteren Ende des Stauraums 5, die vorgesehen ist, um einen aus diesem Fach 7₁ herrührenden Garnstrang zu führen, zwei Ösen 12₂ an einer Vorderseite des angrenzenden Fachs 7₂ zum Führen des Garnstrangs aus den Fach 7₁ bzw. dem Fach 7₂, und schließlich, benachbart zur vorderen Stirnwand 10, drei Ösen 12₃ für die Garnstränge aller drei Fächer 7₁, 7₂, 7₃. Es liegt auf der Hand, dass in anderen Ausgestaltungen die Zahl der Garnstränge und Ösen entsprechend der Zahl der Knoter auch andere Werte annehmen kann.

In ihrer in Fig. 2 gezeigten Betriebsposition befinden sich die Ösen 12 über der Schulterhöhe oder gar über der Augenhöhe eines normal großen Benutzers; außerdem muss ein Benutzer, um einen Garnstrang in die Ösen 12 einzufädeln, sich über seitlich über den Stauraum 5 hinaus vorspringende Räder 13 der Ballenpresse beugen. Um den Zugriff auf die Ösen 12 zu erleichtern, sind diese an einem Bügel 14 montiert, der zwischen der Betriebsposition und einer in Fig. 3 gezeigten Vorbereitungsposition schwenkbar ist. Der Bügel 14 umfasst hier einen sich in Längsrichtung der Ballenpresse 1 langgestreckten stabförmigen Träger 15, an dem die Ösen 12 verteilt sind, und zwei Arme 16, 17 die vom Träger 15 abstehen und am Gehäuse des Stauraums 5, hier z.B. an der Stirnwand 10 und einer Zwischenwand 18 zwischen den Fächern 7₁ und 7₂ angelenkt sind.

Eine Achse 19, um die der Träger 15 zwischen der Betriebsposition und der Vorbereitungsposition schwenkbar ist, verläuft in einer äußeren, d.h. von der Presskammer abgewandten, unteren Ecke der oberen Teilfächer. Der Arm 16 ist in der Betriebsposition im Wesentlichen vertikal und in der Vorbereitungsposition horizontal oder leicht nach außen abschüssig orientiert. So befinden sich die Ösen 12 in der Vorbereitungsposition in einer für den Benutzer zum Einfädeln der in Fig. 3 mit 20 bezeichneten Garnstränge bequem erreichbaren Stellung ungefähr in Höhe des Zwischenbodens und in etwa oberhalb einer Außenseite der Räder 13.

Die Öse 12₁ ist eine einzelne Öffnung im Arm 16; die Ösen 12₂ sind in einer kleinen, mittig am Träger 15 montierten Platte gebildet. Der Arm 17 ist zu einer Platte verbreitert, an der in einer Reihe die drei Ösen 12₃ und, hier in einer teilweise überlappenden Anordnung, zu jeder der drei Ösen 12₃ eine Garnbremse 21 zum Klemmen des durch die betreffende Öse 12₃ verlaufenden Garnstrangs 20 angebracht sind.

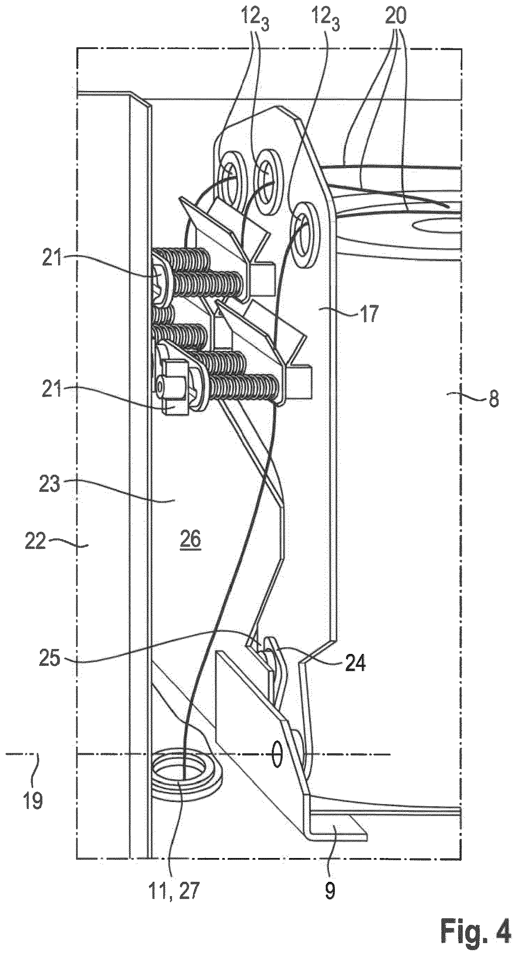

Fig. 4 zeigt den Arm 17 in der Betriebsstellung der Fig. 2. Die vordere Stirnwand 10 umfasst zwei zueinander parallele Platten, eine Außenplatte 22 und eine Innenplatte 23, auf die sich der Zwischenboden 9 stützt und an der der Arm 17 angelenkt ist. Eine an der Innenplatte 23 angelenkte Fallklinke 24 umgreift einen Vorsprung 25 des Arms 17 und sichert so den Bügel 14 in der Betriebsposition. Die Garnbremsen 21 ragen durch einen Ausschnitt der Innenplatte 23 in einen Zwischenraum 26 zwischen den Platten 22, 23. Ösen 27 in einer Platte an einem unteren Ende des Zwischenraums 26, von denen in Fig. 4 eine sichtbar ist, bilden den Garnauslass 11. Die Ösen 27 befinden sich in Höhe des Zwischenbodens 9 und in unmittelbarer Nachbarschaft zur Achse 19, so dass sich die Länge des Weges des Garns von den Ösen 12₃ zum Garnauslass 11 beim Schwenken des Bügels 14 zwischen Betriebs- und Vorbereitungsposition nur geringfügig ändert.

Die Ösen 12₁, 12₂, 12₃ und 27 umfassen jeweils einen ringförmigen Kunststoffkörper mit abgerundetem Querschnitt, der zum Schutz des Bindegarns vor scharfen Kanten einer in ein Blech z.B. des Arms 16, 17 gestanzten Öffnung in letztere eingesetzt ist.

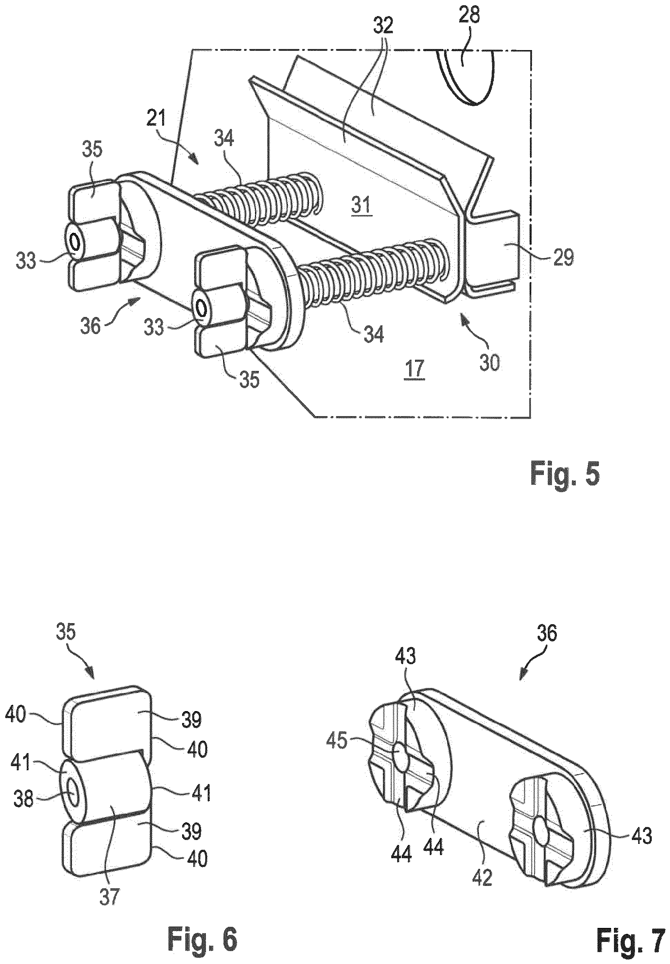

Fig. 5 zeigt eine Detailansicht des Arms 17, in dem die Kunststoffkörper an den hier mit 28 bezeichneten Öffnungen weggelassen sind, und eine der an dem Arm 17 montierten Garnbremsen 21. Die Garnbremse 21 umfasst einen am Arm 17 festen Backen 29 und einen beweglichen Backen 30. Die Backen 29, 30 umfassen einander zugewandte parallele Plattenabschnitte 31 zum Einklemmen eines (nicht dargestellten) zwischen ihnen durchlaufenden Garnstrangs und divergierende Plattenabschnitte 32, die eine der Öffnung 28 zugewandte Einführschräge bilden. Zwei Gewindestangen 33 erstrecken sich senkrecht zur ebenen Oberfläche des Arms 17. Sie sind an dem festen Bremsbacken 29 oder dem Arm 17 verankert. Der bewegliche Backen 30 ist auf die Gewindestangen 33 aufgesteckt und wird von zwei Schraubenfedern 34 gegen den festen Backen 29 gedrückt. Die Schraubenfedern 34 erstrecken sich jeweils um eine Gewindestange 33 herum und sind an einer auf die Gewindestange 33 aufgeschraubten Flügelmutter 35 über eine Druckscheibe 36 abgestützt. Die Spannung der Schraubenfedern 34 und damit die Bremskraft, denen der Garnstrang zwischen den Backen 29, 30 ausgesetzt ist, ist durch Drehen der Flügelmuttern 35 verstellbar.

Die Flügelmuttern 35 haben wie in Fig. 6 gezeigt jeweils einen zentralen Gewindekörper 37 von zylindrischer oder prismatischer Gestalt, durch den sich eine Gewindebohrung 38 erstreckt, und zwei von dem Gewindekörper 37 diametral abstehende Flügel 39. Kanten 40 der Flügel 39 stehen über wenigstens eine Stirnseite 41, vorzugsweise beide Stirnseiten 41, des Gewindekörpers über.

Die in Fig. 7 gezeigte Druckscheibe 36 umfasst eine Grundplatte 42 und zwei formgleiche Puffer 43, die an der Grundplatte 42 befestigt oder einteilig mit ihr geformt sein können. Zwei Bohrungen zum Aufstecken auf die Gewindestangen 33 erstrecken sich durch die Grundplatte 42 und jeweils einen der Puffer 43. An einer von der Grundplatte 42 abgewandten Stirnseite jedes Puffers 43 sind zwei einander und eine Bohrung 45 kreuzende Kerben 44 geformt. Indem die vorspringenden Kanten 40 unter dem Druck der Schraubenfedern 34 in die Kerben 44 eingreifen, verrasten die Flügelmuttern 35 jeweils nach einer Drehung um 90°. Da im Betrieb auftretende Erschütterungen die Verrastung nicht überwinden können, bleibt eine einmal eingestellte Klemmkraft unverändert bestehen, bis eine erneute Justage vorgenommen wird; ein Fixieren der Flügelmuttern 35 durch Kontern o. dgl. ist überflüssig. So ist die Klemmung des Garns zwischen den Backen 29, 30 bequem von Hand ohne Werkzeug einstellbar.

### Bezugszeichenliste

1 Ballenpresse
2 Pickup-Vorrichtung
3 Ende der Presskammer
4
5 Stauraum
6 Klappe
7 Fach
8 Knäuel
9 Zwischenboden
10 vordere Stirnwand
11 Garnauslass
12 Garnführungsmittel, Öse
13 Rad
14 Bügel
15 Träger
16 Arm
17 Arm
18 Zwischenwand
19 Achse
20 Garnstrang
21 Garnbremse
22 Außenplatte
23 Innenplatte
24 Fallklinke
25 Vorsprung
26 Zwischenraum
27 Öse
28 Öffnung
29 Backen
30 Backen
31 Plattenabschnitt
32 Plattenabschnitt
33 Gewindestange
34 Schraubenfeder
35 Flügelmutter
36 Druckscheibe
37 Gewindekörper
38 Gewindebohrung
39 Flügel
40 Kante
41 Stirnseite
42 Grundplatte
43 Puffer
44 Nut
45 Bohrung

## Patentansprüche

1. Ballenpresse (1) mit einem Stauraum (5) für mehrere Garnknäuel (8), wenigstens einem Garnauslass (11), durch den hindurch Garn von den Garnknäueln (8) aus dem Stauraum (5) abziehbar ist, und mindestens einem Garnführungsmittel (12) zum Festlegen des Verlaufs wenigstens eines Garnstrangs (20) von einem in den Stauraum (5) geladenen Garnknäuel (8) zum Garnauslass (11), **dadurch gekennzeichnet, dass** das Garnführungsmittel (12) zwischen einer Betriebsposition, in der es während des Betriebs der Ballenpresse (1) den Garnstrang (20) führt, und einer Vorbereitungsposition geführt bewegbar ist, wobei die geführte Bewegung des Garnführungsmittels (12) eine Schwenkbewegung um eine Achse (19) ist, wobei das Garnführungsmittel (12) auf einem in Richtung der Achse (19) langgestreckten Träger (15) angebracht ist und wobei von dem Träger (15) in radialer Richtung ausgehende Arme (16, 17) an die Achse (19) angelenkt sind.

2. Ballenpresse nach Anspruch 1, **dadurch gekennzeichnet, dass** die geführte Bewegung des Garnführungsmittels (12) eine Schwenkbewegung um eine horizontale Achse (19) ist.

3. Ballenpresse nach Anspruch 1 oder 2, **dadurch gekennzeichnet, dass** der Abstand des Garnauslasses (11) von der Achse (19) maximal halb so groß ist wie der Abstand des Garnführungsmittels (12) von der Achse (19).

4. Ballenpresse nach einem der vorhergehenden Ansprüche, **dadurch gekennzeichnet, dass** die Vorbereitungsposition des Garnführungsmittels (12) an der Ballenpresse (1) tiefer und/oder weiter auswärts als die Betriebsposition liegt.

5. Ballenpresse nach Anspruch 4, **dadurch gekennzeichnet, dass** das Garnführungsmittel (12) in der Vorbereitungsposition seitwärts aus dem Stauraum (5) herausgeschwenkt ist.

6. Ballenpresse nach einem der vorhergehenden Ansprüche, **dadurch gekennzeichnet, dass** der Stauraum (5) wenigstens ein oberes und ein unteres Teilfach für Garnknäuel umfasst, und dass die Betriebsposition des Garnführungsmittels (12) im oberen Teilfach und die Vorbereitungsposition in Höhe des unteren Teilfachs liegt.

7. Ballenpresse nach einem der vorhergehenden Ansprüche, **dadurch gekennzeichnet, dass** mehrere Garnführungsmittel (12) auf einem gemeinsamen Träger (15) in einer Längsrichtung beabstandet angeordnet sind und die geführte Bewegung eine Bewegung des Trägers (15) in einer Querrichtung quer zu der Längsrichtung ist.

8. Ballenpresse nach einem der vorhergehenden Ansprüche, **dadurch gekennzeichnet, dass** der Stauraum (5) durch eine Klappe (6) verschließbar ist und die Klappe (6) in geschlossener Stellung den Weg des Garnführungsmittels (12) in die Ladestellung versperrt.

9. Ballenpresse nach einem der vorhergehenden Ansprüche, **dadurch gekennzeichnet, dass** eine Garnbremse (21) gemeinsam mit dem Garnführungsmittel (12) bewegbar ist.

10. Ballenpresse nach Anspruch 9, **dadurch gekennzeichnet, dass** die Garnbremse (21) an einem der Arme (17) angebracht ist.

11. Ballenpresse nach Anspruch 9 oder 10, mit einer Garnbremse, die zwei einen Klemmspalt begrenzende Backen (28, 29), wenigstens eine Gewindestange (33) und eine Schraubenfeder (34) umfasst, die koaxial zur Gewindestange (33) angeordnet und zwischen einem der Backen (29) und einer entlang der Gewindestange (33) beweglichen Mutter in verstellbarem Maße stauchbar ist, **dadurch gekennzeichnet, dass** die Mutter eine Flügelmutter (35) ist und eine zwischen der Flügelmutter (35) und der Schraubenfeder (34) geklemmte, an der Gewindestange (33) drehfeste Druckplatte (36) wenigstens eine mit einem Flügel (39) der Flügelmutter (35) zusammenwirkende Rastkontur aufweist.

12. Ballenpresse nach Anspruch 11, **dadurch gekennzeichnet, dass** der Flügel (39) über einen zentralen Gewindekörper (37) der Flügelmutter (35) zur Druckscheibe (36) hin vorspringt und die Rastkontur eine Aussparung aufweist, in die der Flügel (39) eingreift.

13. Ballenpresse nach Anspruch 12, **dadurch gekennzeichnet, dass** die Aussparung wenigstens eine eine Drehachse der Flügelmutter (35) kreuzende Kerbe (43) aufweist.

14. Ballenpresse nach einem der Ansprüche 11 bis 13, **dadurch gekennzeichnet, dass** sie zwei Gewindestangen (33) aufweist, die beide die Druckscheibe (36) durchsetzen.

## Claims

1. A baler (1) with a storage compartment (5) for a plurality of balls of twine (8), at least one twine outlet (11) through which twine can be drawn out of the storage compartment (5) from the balls of twine (8), and at least one twine guide means (12) for setting the path of at least one line of twine (20) from a ball of twine (8) loaded into the storage compartment (5) to the twine outlet (11), **characterized in that** the twine guide means (12) is movable and guided between an operating position, in which it guides the line of twine (20) during operation of the baler (1), and a preparation position, wherein the guided movement of the twine guide means (12) is a pivotal movement about an axis (19), wherein the twine guide means (12) is attached to an elongated support (15) which extends in the direction of the axis (19) and wherein arms (16, 17) which extend out from the support (15) in the radial direction are articulated on the axis (19).

2. The baler according to claim 1, **characterized in that** the guided movement of the twine guide means (12) is a pivotal movement about a horizontal axis (19).

3. The baler according to claim 1 or claim 2, **characterized in that** the distance from the twine outlet (11) to the axis (19) is at most half the size of the distance from the twine guide means (12) to the axis (19).

4. The baler according to one of the preceding claims, **characterized in that** the preparation position of the twine guide means (12) on the baler (1) lies deeper and/or further outwards than the operating position.

5. The baler according to claim 4, **characterized in that** in the preparation position, the twine guide means (12) is pivoted laterally out of the storage compartment (5).

6. The baler according to one of the preceding claims, **characterized in that** the storage compartment (5) comprises at least one upper and a lower part-compartment for balls of twine, and **in that** the operating position for the twine guide means (12) lies in the upper part-compartment and the preparation position lies at the height of the lower part-compartment.

7. The baler according to one of the preceding claims, **characterized in that** a plurality of twine guide means (12) are disposed on a common support (15) and are separated in a longitudinal direction and the guided movement is a movement of the support (15) in a transverse direction which is transverse to the longitudinal direction.

8. The baler according to one of the preceding claims, **characterized in that** the storage compartment (5) can be closed by means of a flap (6) and in the closed position, the flap (6) blocks the way for placing the twine guide means (12) in the loading position.

9. The baler according to one of the preceding claims, **characterized in that** a twine brake (21) can be moved together with the twine guide means (12).

10. The baler according to claim 9, **characterized in that** the twine brake (21) is attached to one of the arms (17).

11. The baler according to claim 9 or claim 10, with a twine brake which comprises two shoes (28, 29) which define a tensioning gap, at least one threaded rod (33) and a helical spring (34) which is disposed coaxially to the threaded rod (33) and which can be compressed in an adjustable manner between one of the shoes (29) and a nut which can be moved along the threaded rod (33), **characterized in that** the nut is a wing nut (35) and a pressure plate (36) which is clamped between the wing nut (35) and the helical spring (34) and is fixed against rotation on the threaded rod (33) has at least one latching contour which cooperates with one wing (39) of the wing nut (35).

12. The baler as claimed in claim 11, **characterized in that** the wing (39) protrudes over a central threaded body (37) of the wing nut (35) towards the pressure plate (36) and the latching contour has a recess into which the wing (39) engages.

13. The baler according to claim 12, **characterized in that** the recess has at least one notch (43) which crosses a rotational axis of the wing nut (35).

14. The baler according to one of claims 11 to 13, **characterized in that** it has two threaded rods (33), both of which pass through the pressure plate (36).

## Revendications

1. Presse à balles (1) comprenant un espace de stockage (5) pour plusieurs pelotes de ficelle (8), au moins une sortie de ficelle (11) à travers laquelle de la ficelle peut être déroulée des pelotes de ficelle (8) hors de l'espace de stockage (5), et au moins un moyen de guidage de ficelle (12) pour définir le parcours au moins d'un brin de ficelle (20) depuis une pelote de ficelle (8) chargée dans l'espace de stockage (5) jusqu'à la sortie de ficelle (11), **caractérisée en ce que** le moyen de guidage de ficelle (12) est déplaçable de manière guidée entre une position de fonctionnement, dans laquelle il guide le brin de ficelle (20) pendant le fonctionnement de la presse à balles (1), et une position de préparation, le déplacement guidé du moyen de guidage de ficelle (12) étant un déplacement pivotant autour d'un axe (19), le moyen de guidage de ficelle (12) étant monté sur un support (15) allongé dans le sens de l'axe (19), et des bras (16, 17) partant du support (15) dans la direction radiale étant articulés avec l'axe (19).

2. Presse à balles selon la revendication 1, **caractérisée en ce que** le déplacement guidé du moyen de guidage de ficelle (12) est un déplacement pivotant autour d'un axe horizontal (19) .

3. Presse à balles selon la revendication 1 ou 2, **caractérisée en ce que** la distance de la sortie de ficelle (11) à l'axe (19) est au maximum égale à la moitié de la distance du moyen de guidage de ficelle (12) à l'axe (19).

4. Presse à balles selon une des revendications précédentes, **caractérisée en ce que** la position de préparation du moyen de guidage de ficelle (12) sur la presse à balles (1) est plus basse et/ou plus extérieure que la position de fonctionnement.

5. Presse à balles selon la revendication 4, **caractérisée en ce que**, dans la position de préparation, le moyen de guidage de ficelle (12) est pivoté latéralement hors de l'espace de stockage (5).

6. Presse à balles selon une des revendications précédentes, **caractérisée en ce que** l'espace de stockage (5) inclut au moins un sous-compartiment supérieur et un sous-compartiment inférieur, et **en ce que** la position de fonctionnement du moyen de guidage de ficelle (12) se trouve dans le sous-compartiment supérieur et la position de préparation se trouve à la hauteur du sous-compartiment inférieur.

7. Presse à balles selon une des revendications précédentes, **caractérisée en ce que** plusieurs moyens de guidage de ficelle (12) sont disposés de manière distante dans une direction longitudinale sur un support commun (15), et le déplacement guidé est un déplacement du support (15) dans une direction transversale à la direction longitudinale.

8. Presse à balles selon une des revendications précédentes, **caractérisée en ce que** l'espace de stockage (5) peut être fermé par l'intermédiaire d'un abattant (6), et l'abattant (6) en position fermée bloque le chemin du moyen de guidage de ficelle (12) vers la position de chargement.

9. Presse à balles selon une des revendications précédentes, **caractérisée en ce qu'**un frein de ficelle (21) est déplaçable conjointement avec le moyen de guidage de ficelle (12).

10. Presse à balles selon la revendication 9, **caractérisée en ce que** le frein de ficelle (21) est disposé sur un des bras (17).

11. Presse à balles selon la revendication 9 ou 10, comprenant un frein de ficelle qui inclut deux mâchoires (28, 29) limitant une fente de serrage, au moins une tige filetée (33) et un ressort hélicoïdal (34) qui est disposé coaxialement à la tige filetée (33) et est comprimable dans une proportion réglable entre une des mâchoires (29) et un écrou déplaçable le long de la tige filetée (33), **caractérisée en ce que** l'écrou est un écrou papillon (35), et une plaque de pression (36) coincée entre l'écrou papillon (35) et le ressort hélicoïdal (34), solidaire en rotation de la tige filetée (33), comporte au moins un contour cranté coopérant avec une ailette (39) de l'écrou papillon (35).

12. Presse à balles selon la revendication 11, **caractérisée en ce que** l'ailette (39) dépasse d'un corps fileté central (37) de l'écrou papillon (35) en direction de la plaque de pression (36), et le contour cranté comportement un évidement dans lequel l'ailette (39) pénètre.

13. Presse à balles selon la revendication 12, **caractérisée en ce que** l'évidement comporte au moins une entaille (43) croisant un axe de rotation de l'écrou papillon (35).

14. Presse à balles selon une des revendications 11 à 13, **caractérisée en ce qu'**elle comporte deux tiges filetées (33) qui traversent toutes les deux la plaque de pression (36).
